# EUROPEAN PATENT SPECIFICATION

(11) **EP 0 681 152 B1**
(45) Date of publication and mention of the grant of the patent: **31.07.2002**
(21) Application number: 95830181.4
(22) Date of filing: 05.05.1995
(51) Int. Cl.: F25B 49/04, F25B 15/04

(54) **Absorption heat pump systems for air conditioning**
Absorptionswärmepumpensysteme für die Klimatisierung
Systèmes de pompes à chaleur du type à absorption pour le conditionnement de l'air

(30) Priority: 06.05.1994 IT RM940283
(43) Date of publication of application: 08.11.1995
(73) Proprietor: ENEA ENTE PER LE NUOVE TECNOLOGIE, L'ENERGIA E L'AMBIENTE, I-00198 Roma (IT)
(72) Inventor: Corallo, Giuseppe, I-00177 Roma (IT)
(74) Representative: Sarpi, Maurizio

## Description

The present invention relates to the field of the cold/warm air conditioning systems operating with a heat pump and, more particularly, concerns a heat pump system of the absorption type.

As known, the main feature of the heat pumps is the production of heat or cold in order to comply with the requests of the users.

Heat pumps divide into two wide classes, i.e. absorption and compression heat pumps, both using outer energy to cause the heat of the evaporator circuit at low temperature (-5/12°C) to pass to a higher temperature (45/60°C) so as to be transmitted to the users or to be dissipated.

It is also known, from US-A-5289868, an absorption chiller heater and air conditioning system with two burners that uses a pump whose flow-rate is controlled by varying the number of revolutions per minute of the pump itself.

Further, US-A-4578961 discloses a very complex absorber having separated inlets for the absorber and for the refrigerant gas that have to be mixed.

In case of absorption heat pumps the requested energy is thermal energy at high temperature (burner-vapour) and is used to heat the reboiler of a vapour generator which is at about 150-180°C.

From the foregoing it is apparent that heat pumps have two circuits with different functions, the first collecting heat at low temperature, the second transmitting the heat.

This invention aims at providing such a system in which several structural and functional teachings are introduced such as to achieve the dual object of avoiding mechanical complexities which cause the cost to increase and assuring in any case the requested performance, competitive final cost, and compliance with the technical rules in force in the main industrial countries.

This aim is achieved by providing a system as defined in claim1.

The invention will now be described in a detailed way with reference to the accompanying drawings which show by way of an illustrative, non-limiting example a preferred embodiment of the invention. In the drawings:
Fig. 1 shows schematically an absorption heat pump system; this system is not in accordance with the invention;
Figs. 2 and 2A show the detail of the safety device for the direct-flame vapour generator of Fig. 1;
Fig. 3 shows the cold/warm diagram;
Fig. 3A is the axial section of the switching valve having facing solid discs and used in the diagram of Fig. 3;
Figs. 3B and 3C are two front views of the discs in the warm and cold positions, respectively;
Fig. 4 shows two axial section views of the valve equipped or not with water-proof room;
Figs. 5, 5A and 5B show three front views of an alternative switching disc also allowing the production of sanitary warm water in the warm, cold, sanitary warm water positions, respectively, according to the operating diagram of Fig. 10;
Fig. 6 shows an alternative to the diagram of Fig. 1 in which, as required by the invention, a level regulator of the cooling fluid, for instance condensed NH₃, is provided;
Fig. 7 shows the detail of the level regulator in the storage tank of Fig. 6;
Figs. 8 and 8a show elevation views of the absorber of Fig. 6 from the outside and in section, respectively;
Fig. 9 shows the detail of the distributor associated to the absorber of Fig. 8;
Fig. 10 is a block diagram showing the operating principle of the system according to the user's request;
Figs. 11A and 11B show two different ways of connection of the components on the low-pressure side.

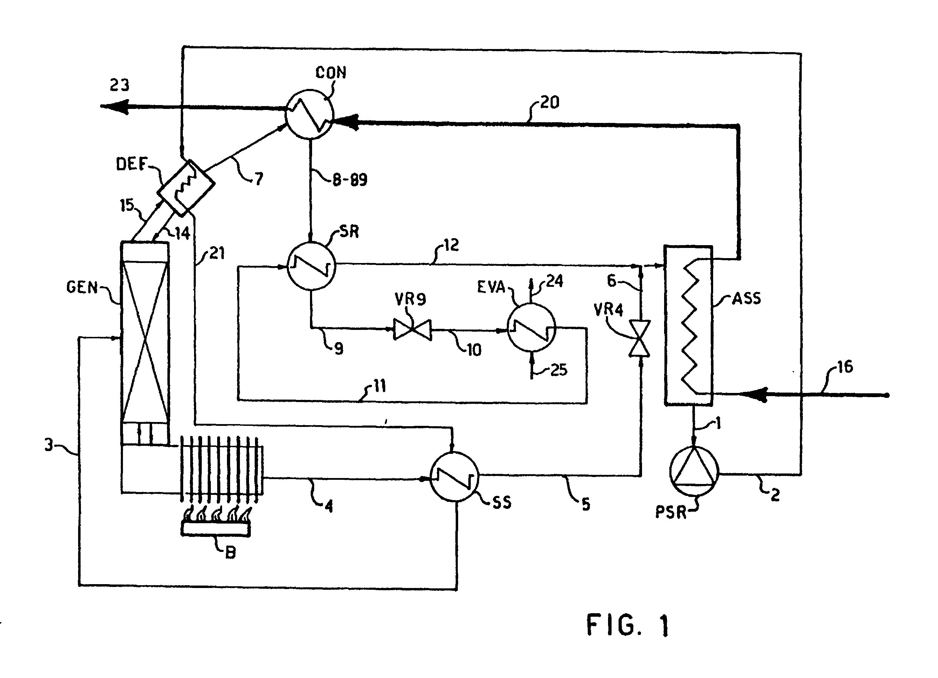

With reference to Fig. 1 the absorption heat pump consists of a series of main components connected to one another so as to form a closed circuit: vapour generator GEN, absorber ASS, evaporator EVA, enriched solution pump PSR, two lamination valves VR4 and VR9, dephlegmator DEF, condenser CON, subcooler SR, solution exchanger SS, and a burner B.

In such closed circuit, a particular fluid, for example a mixture of water and ammonia, is subjected to some cyclic transformations in order to transfer low-temperature heat (-5 to 12°C) from the evaporator to the condenser and the absorber at a higher temperature (about 45 to about 60°C) to the cost of high-temperature heat (160 to 180°C) supplied to the vapour generator.

Still referring to Figure 1, the solution enriched with ammonia from absorber ASS to line 1 is pumped by enriched solution pump PSR through line 2 to dephlegmator DEF to be cooled, and then is supplied to exchanger SS in order to regenerate heat and through pipe 3 to ammonia vapour generator GEN.

A solution 4 impoverished of ammonia flows from the bottom of the column generator GEN to exchanger SS where it is cooled and then through lamination valve VR4 to absorber ASS. A vapour current 15 enriched with ammonia flows from the top of generator GEN to the upper dephlegmator and divides into a condensed liquid current 14, which is the reflux current for the enrichment section of the distillation column, and a vapour current 7 even more enriched of ammonia which condenses in condenser CON and then through line 8-89 is subcooled in subcooler SR, flows through line 9, is laminated in lamination valve VR9, reaches through line 10 evaporator EVA, where it largely evaporates again, flows through line 11 back to subcooler SR, where it absorbs sensitive heat, and then flows through line 12 to absorber ASS, where it restores the initial enriched solution, and begins a further cycle.

Low temperature heat is provided in the evaporator EVA at the cost of the glycol and water current of lines 25-24: "cold water" circuit.

The absorber is cooled by current 16 of glycol and water which also cools the condenser through line 20: "warm water" circuit. Generator GEN is heated by a high temperature source formed of fossil oil burner B.

Pressures which establish within vapour generator GEN, i.e. about 18-25 ata, in case the coolant is ammonia and the absorbent liquid is water, fall in the domain of rules governing the construction and the operation.

Such rules concern all of the vapour generators having a volume greater than 5 litres and a little higher pressure than the atmosphere, as it occurs in most systems even of little power.

The rules in force provide such a lot of safety and operation standards that the commercial production of those systems having low and middle power is economically prohibitive.

The reason of such safety standards is that a burst may occur if the level of the liquid to be evaporated falls below the level licked by the flames. Such a burst is due to the fact that the part, which does not get wet, becomes red-hot and loses those mechanical properties which usually allow it to withstand the operating pressure.

In the absorption heat pumps, the pump of the enriched solution PSR provides for supplying the generator with the solution enriched with coolant (line 3) while the latter is emptied of the impoverished solution (line 4) and the distilled vapour (line 7).

In order that such a system gives economic advantages it is essential that the efficiency of the boiler is as high as possible, as it occurs in the generators with direct-flame heating which, however, are subjected to the most restrictive rules.

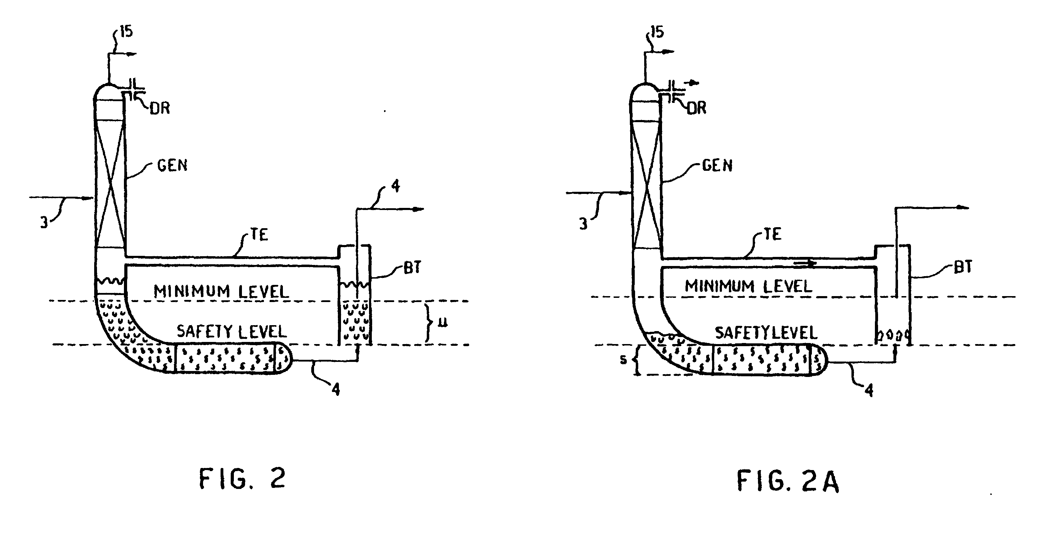

In order to avoid that the level of the liquid in the generator falls below the level reached by the flames due for example to a failure of the pump, the invention provides, in the line 4 of the impoverished solution as shown in Fig. 2, a passive safety device including a drum BT, which is run from the bottom to the top by the impoverished solution and communicates through pipe TE to the vapour generator column just above the surface of the liquid under normal operating conditions, and a burst disc DR placed at a suitable height along the vapour generator column.

If the level of the liquid falls below the height of suction (Fig. 2A), the vapour from the top of drum BT prevents the impoverished solution from further flowing and emptying the reboiler and operates one of the arranged safety devices or the burst disc DR.

Under normal operating conditions the suction head is dipped in the liquid of the generator bottom and allows the impoverished solution to freely flow.

The size of the drum is very important for the effective safety operation of the device which operates in case of equipment failure causing the burst disc DR to open before the equipment reaches the bursting pressure.

With reference to Figs. 1, 2, 6, 7, under the worst condition when the generator would empty due to any reason while the burner is alight and the condenser is cool, a volume of liquid comprised between the two broken lines and designated by "u" is needed so as to provide for the further emptying which is only due to any evaporation through the pipe conveying the vapour to the condenser.

Such a volume of liquid should be at least the same as the volume of those components (condenser, one part of the storage tank and connecting pipes, i.e. the components of the closed circuit) which are normally emptied out of liquid and connected to the vapour output line before the coolant lamination valve, at the same pressure of the distillation system, which is in turn connected to those devices normally emptied out of liquid and free from density differences due to temperature and concentration.

Once the condenser is filled with liquid, a certain volume of liquid designated by "s" remains below the safety level and maintains the reboiler filled in that portion licked by the flames. At the same time the burst disc DR opens due to the sharp increase in the pressure.

The succession of the above-described events causes only a negligible quantity of condensate gradually filling the mentioned components to pass through the capillaries CP9 of coolant expansion, because a certain quantity of vapour passing from the suction pipe of the drum through the larger capillary of the impoverished solution would provide for compensating the pressure upstream and downstream of the capillary CP9.

If one does not rely upon the reached safety level, the drum may be arranged so that the volume designated by "u" is such as to fill not only the above-mentioned components but also those components downstream of the expansion capillaries which normally are not filled with liquid (evaporator, low-pressure side of the subcooler, absorber, connecting pipes), i.e. those components of the closed circuit which normally are emptied out of liquid and connected to the distillation system.

It should be appreciated that, even if the part licked by the flames were partially emptied out of liquid, the high heat exchange coefficient of the boiling liquid would keep low the temperature of the metal walls of the reboiler so that the margin of safety of the described system is very high.

Advantageously, such an inherent safety device allows most of the departures from the above-mentioned rules in force to be achieved.

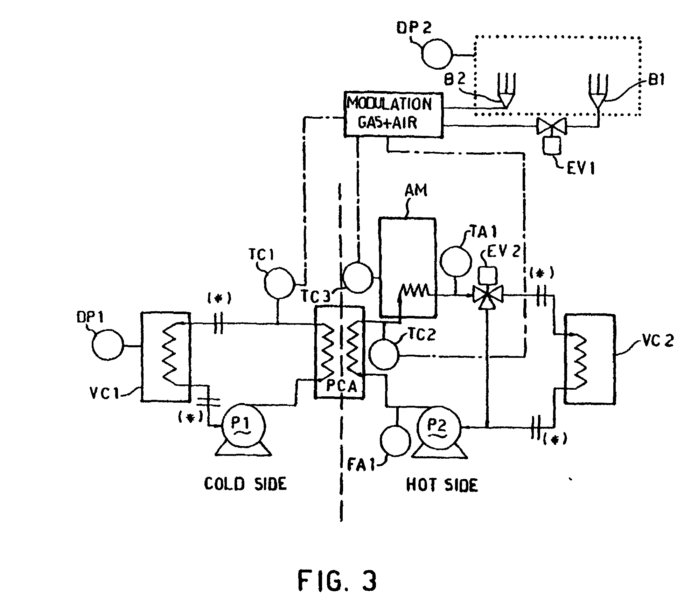

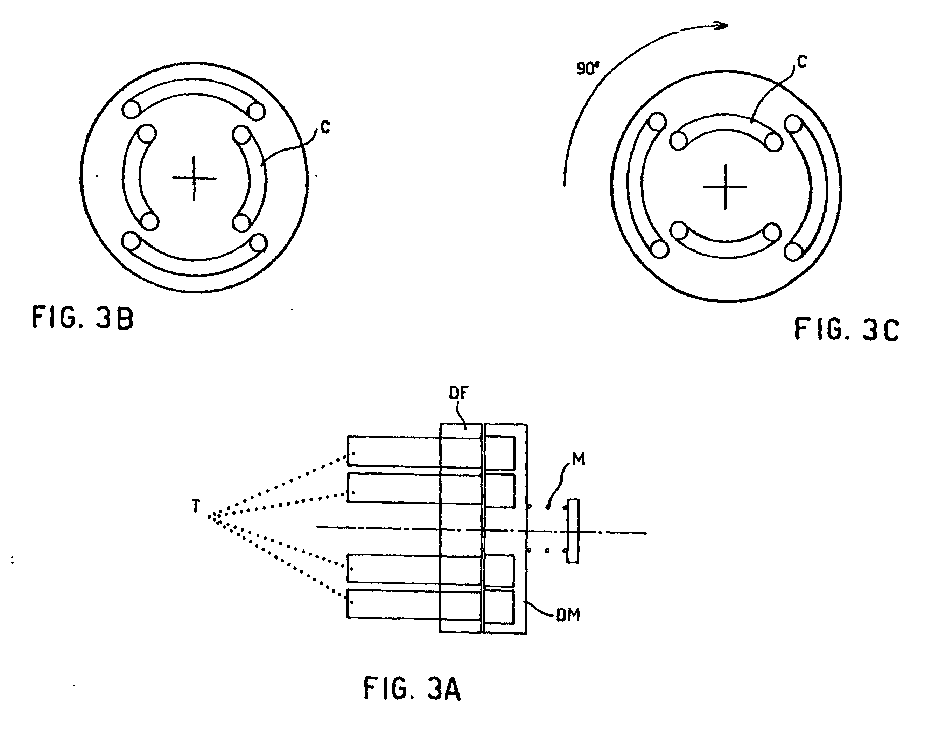

Fig. 3 shows the diagram of a system provided with an absorption heat pump PCA for air conditioning by means of convectors VC1 and VC2 by winter heat regeneration and summer heat disposal to the cost of the environmental air. Without explaining the logic of operation of the different temperature sensors and alarm devices, it should be noted that convectors VC1 operate on the inside and convectors VC2 on the outside in summer, vice versa in winter.

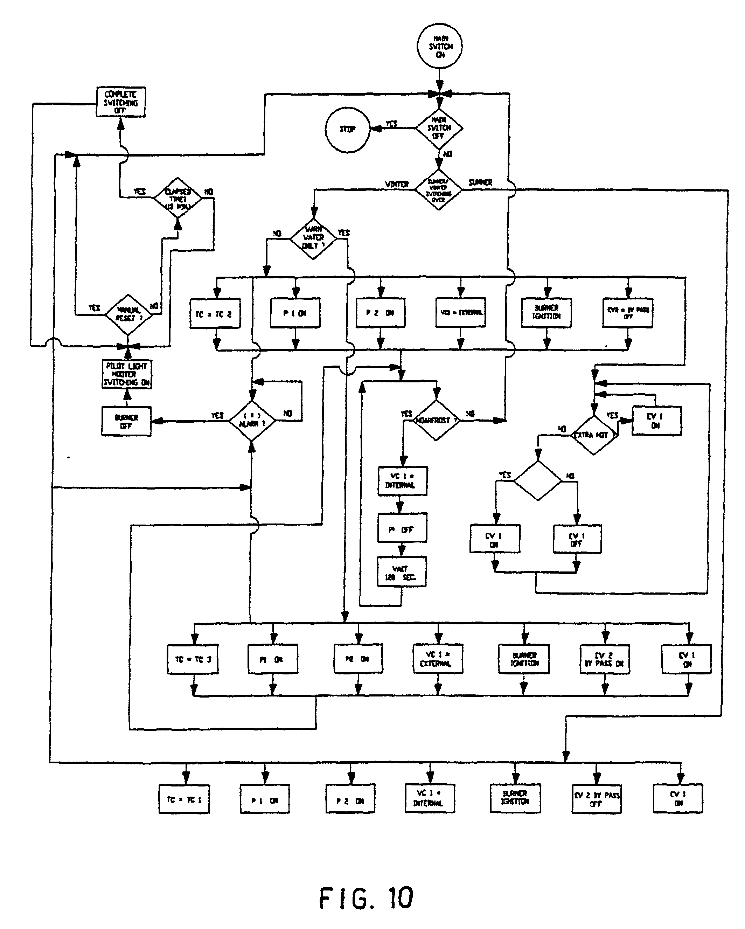

In order to understand the control logic of the auxiliary circuits of warm and cold water, reference should be made, beside Fig. 3, also to the block diagram of Fig. 10.

In summer, the system has to supply the cold to the rooms to be air conditioned and operates at the maximum power so that on/off electrovalve EV1 of the first burner B1 is open and the regulation is carried out by valve TC1 (set point at +7°C) modulating the gas flow rate with reverse proportionality.

In winter, the system operates at reduced power so that electrovalve EV1 is closed and the regulation is carried out by valve TC2 (set point at +50°C) modulating the gas flow rate with direct proportionality only to burner B2.

In order to automatically switch the system from summer to winter operation it is necessary to provide a device reversing the water currents in the positions designated by (*) in Fig. 3. Such a device should intercept eight pipes so that an eight-way switch is needed. In summer, convector VC1 operates to the inside, and VC2 to the outside, vice versa in winter.

The most simple embodiment of the reversal device performing the above-described function consists of two facing plane discs DF and DM (see Figs. 3A, 3B and 3C), one of which (DF) is fixed and receives fittings for pipes T, the other is movable (DM) and includes four slots C extending along circular sectors by 90°.

The reversal of the operation is carried out by a rotation of the movable disc by a quarter of revolution.

The winter position is shown in Fig. 3B, the summer position in Fig. 3C. The following symbols appear at the ends of the slots C and represent the eight pipes T to be connected:
IAC: input of warm water to the absorption heat pump PCA;
IAF: input of cold water to the absorption heat pump PCA;
IEX: input to the outside convector;
IIN: input to the inside convector;
UAC: output of the warm water from PCA;
UAF: output of the cold water from PCA;
UEX: output from the outside convector;
UIN: output from the inside convector.

As the pipe fittings are placed at 90° so as to be disposed in pairs at the ends of the engaged slots C, it is seen that the convector to the outside are connected to the cold water circuit and the convector to the inside are connected to the warm water circuit in winter, vice versa in summer.

In order to avoid a thermal short circuit among the currents supplying the multi-way valve, it is recommended to use materials having low thermal conductivity, such as synthetic resins, ceramic, glass, a.s.o.

Sealing O-rings are provided along the circular valve bodies and slots. Alternatively the sealing is assured by the contact between the plane surfaces of both discs because of the low pressure involved (5-10 mca).

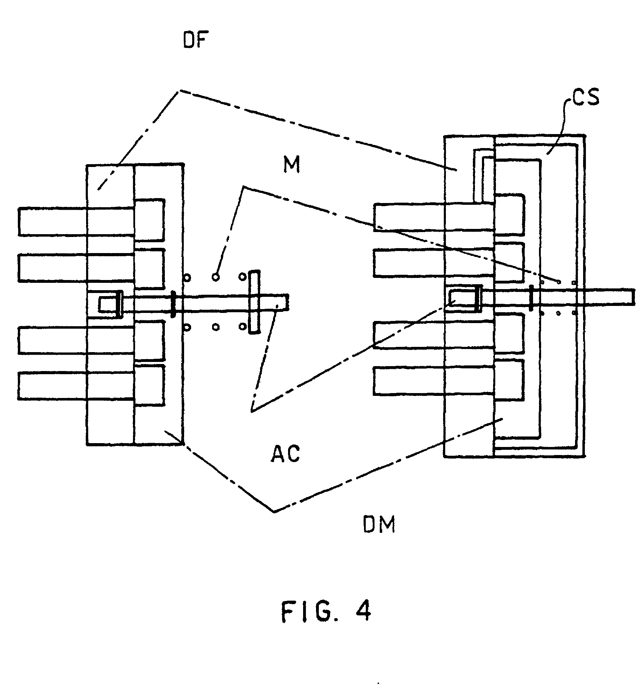

The contact between the discs and the compensation of the wear clearance (see also Fig. 4) can be assured by an outer spring M coaxial with the control shaft AC integral with the movable disc and anchored to the fixed disc or by the water pressure due to the delivery head of one of the two circuits. In the latter case there is provided a sealed room CS integral with the fixed disc and including the movable disc. Such a room connects the surface of the movable disc opposite to that containing the slots C to one of the pipes at the highest pressure. Spring M is intended only to keep the rest position.

If a servomotor is used, the arranged eight-way valve may be used to automatically defrost the outer convectors under control of the negative pressure sensor DP1 by delivery of warm water caused by a short switching to the summer position and by stopping the circulator P1 of the evaporator. The warm water defrosts the outside convector VC2 and the cold water is prevented from being supplied to the inside convector VC1 to avoid an undesired lowering of temperature.

Flownmeter FA1 in the delivery circuit of the cooling side and the vacuum sensor DP2 along with the temperature alarm sensor TA at the bottom of the generator and the highpressure alarm sensor PA operate to put out only the burner and to put on a warning light and an acoustic signal, if any, awaiting the manual reset of the safety block. If the waiting time is longer than a predetermined time the putting out of the whole system may be provided.

On the warm side of the circuit of Fig. 3, there are provided a storage tank AM to produce sanitary warm water and a three-way electrovalve EV2 to circulate the warm water only to the storage tank in case only the production of sanitary warm water is requested.

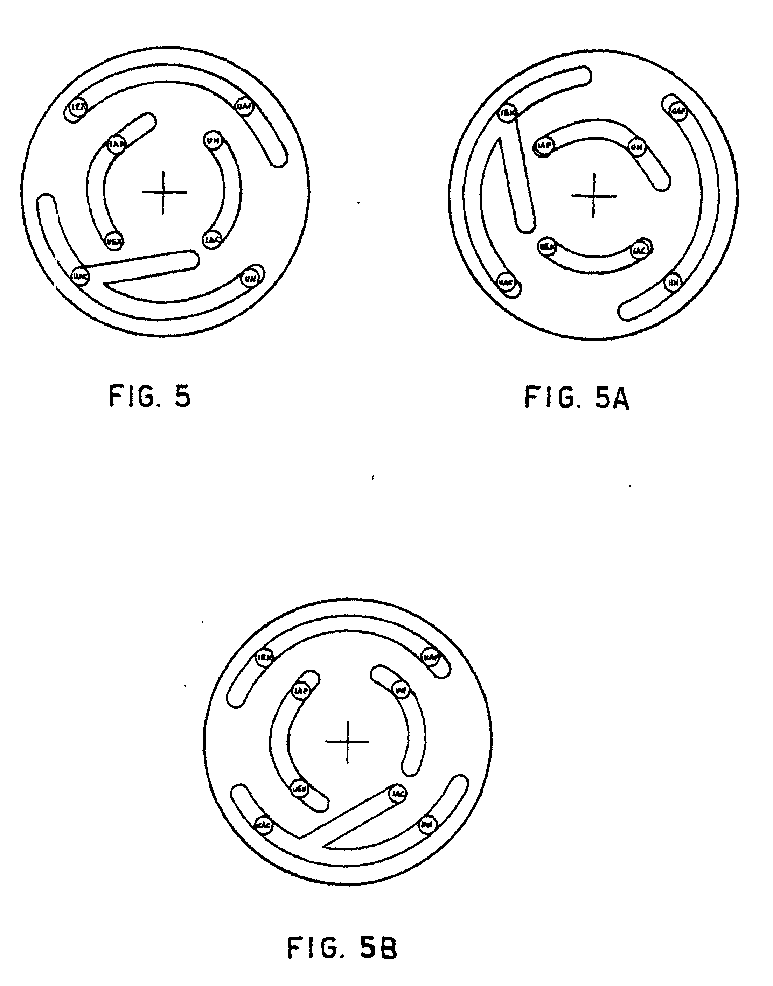

As the passageways in the body of the multi-way valve are easily provided, the function of the three-way valve in the above-described case may be extended by modifying the slots and by further rotating the disc from the winter position of Fig. 5. In Figs. 5A and 5B there are shown the positions of the valve in case of summer air conditioning and production of sanitary warm water, respectively.

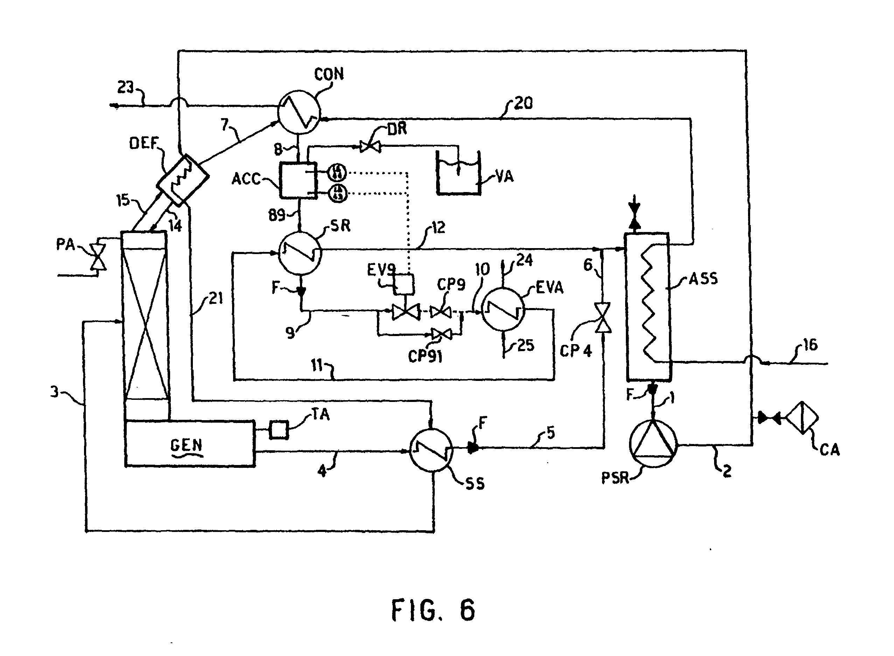

The system shown in Fig. 6 is similar to that already described with reference to Fig. 1 and then the like references designate already described parts. In this figure there are provided a storage tank ACC, an expansion tank VA, an air chamber CA, capillaries CP, filters F, an electrovalve EV, a solution exchanger SS, and a burst disc DR.

In the present absorption systems operating for example with H₂O/NH₃, the coolant is subjected to a subcooling before entering the evaporator in order to increase the efficiency of the system.

To this end, it is necessary to place between condenser CON and subcooler SR a second capillary or a lamination member to assure a further pressure difference which adds to the main pressure difference before the evaporator. Of course, such capillaries or lamination members are stationary components and do not allow the system to be perfectly regulated so as to operate at reduced power.

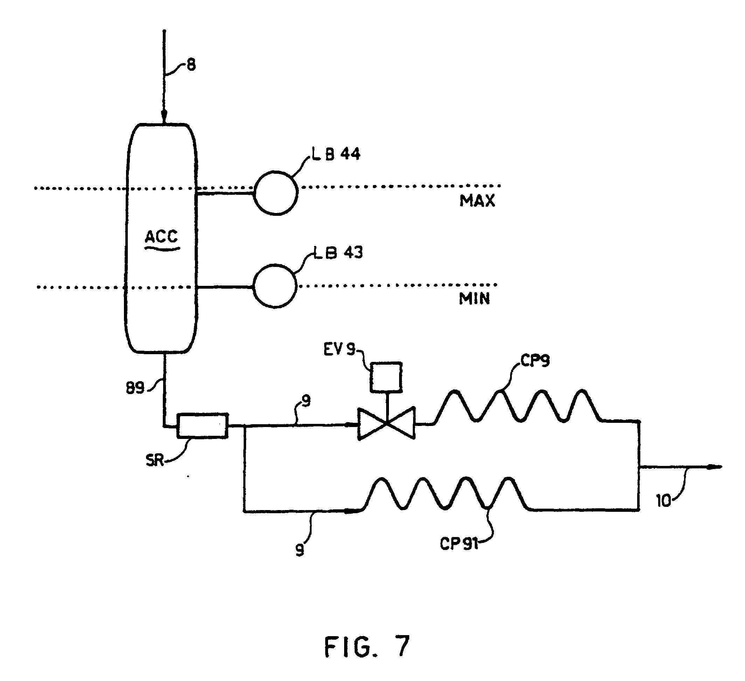

In order to avoid this drawback (see Figs. 6 and 7), there is provided downstream of the condenser a level regulator formed of a storage tank ACC before the subcooler SR and two capillaries CP9 and CP91 in parallel, one of which being intercepted by an electrovalve EV9.

The first capillary can accept a lower flow rate than the minimum flow rate produced by the system.

The second capillary together with the first one allows the passage of a greater amount of coolant than the maximum quantity produced by the system.

If electrovalve EV9 is controlled by two level switches LB44 and LB43, such a system operates as follows:
I case: when the level in storage tank ACC reaches the maximum height, electrovalve EV9 should be opened and should be kept open until the minimum-level switch comes into operation.
II case: when the level in storage tank is at a minimum, the electrovalve is closed until the maximum level is reached again. In this way, the level is always comprised between the two predetermined minimum and maximum heights so as to assure the control for the condensing vapour from the condenser as well as the correct operation of the evaporator.

At the present state of art, the absorbers used in the absorption heat pumps are generally of the type providing a film falling on a pipe coil with glycol and water cooling.

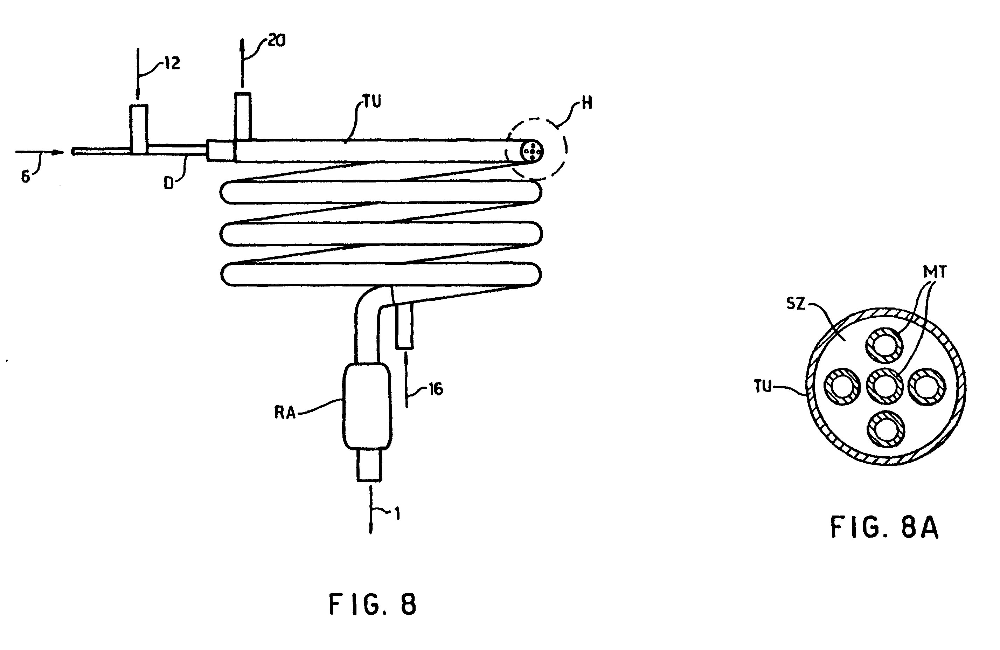

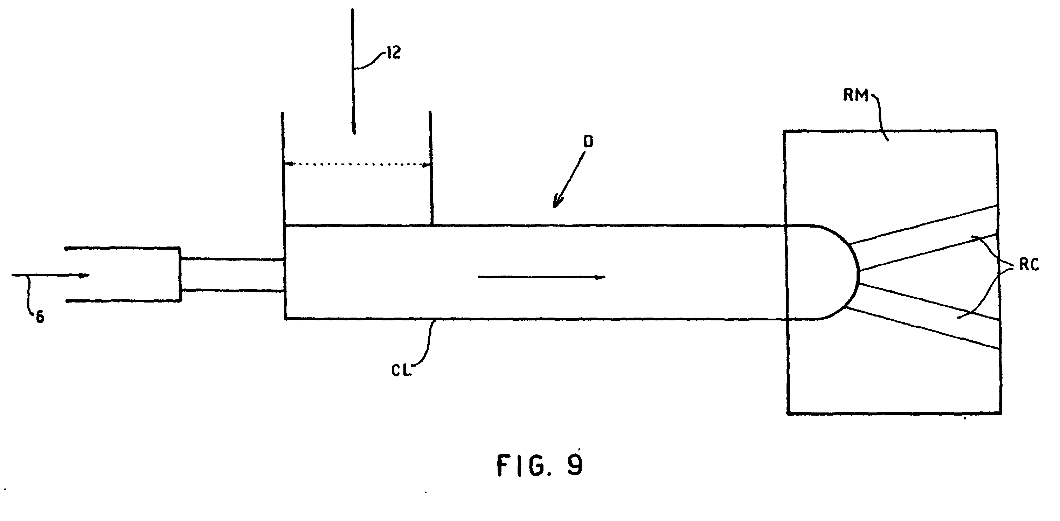

In order to simplify the construction and to avoid the already mentioned rules regarding the pressure reservoirs, the invention provides a "multi-pipes to pipe" absorber shown in Figs. 8 and 8a. The water-ammonia mixture flows within the multi-pipes MT. The cooling occurs outside such multi-pipes in the room SZ but inside the tubular jacket TU of the pipe coil. Heat exchanger TU is connected downstream of a nebulizer D (Fig. 9) mixing the phases before their entering the multi-pipes. Such a nebulizer has a cylindrical body CL in which the liquid-vapour spray mixture is conveyed to the direction indicated by the arrow.

After the distributor-nebulizer D there is a fitting RM which divides into five equal parts the current after the mixing and conveys them to the already described pipes MT through the fitting RC.

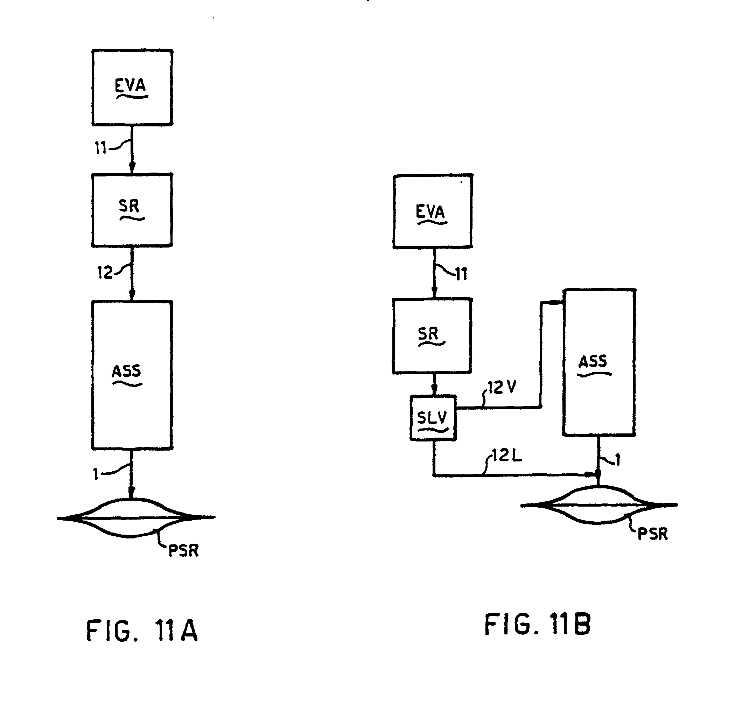

A tank RA may be provided at the output of the enriched solution (Fig. 8) in case the upper level of absorber ASS is higher than the lower level of the subcooler SR so as to collect the liquid 12L from the liquid-vapour separator SLV downstream of the subcooler SR (Fig. 11B).

## Claims

1. An absorption heat pump system for air conditioning, in which a direct-flame vapour generator (GEN), an absorber (ASS), an evaporator (EVA), a pump (PSR) of an enriched solution, a pair of lamination valves (VR4, VR9), a subcooler (SR), and a solution exchanger (SS) are connected to one another so as to form a closed circuit, the system further including in combination:
- inherent safety means for the components exposed to the direct flames of the burner (B) intended to maintain the liquid level in the vapour generator (GEN) over a safety level;
- a cold/warm switching valve adapted to operate the system under reversible control even at reduced or half power without any switching off and re-starting, said switching valve controlling the system operation by reversing the water currents into the heat pump system itself;
- a cooling fluid level regulating means adapted to keep the level of the cooling fluid contained in a storage tank (ACC) between two predetermined values so as to always. assure the optimum operation of the evaporator; and
- the absorber (ASS) being a multi-pipe absorber, said pipes being contained in a tubular coil jacket.

2. The system according to claim 1, **characterized in that** said inherent safety means is formed of a drum (BT) filled with a suitable quantity of liquid solution and connected to the reboiler so as to prevent the latter from being accidentally emptied out below a predetermined safety level.

3. The system according to claim 2, **characterized. in that** said drum (BT) is placed at the bottom output (4) of the reboiler, is provided with a pipe (TE) for its connection above the surface of the liquid of the reboiler to compensate the levels, and is also provided with a suction head so as to stop the current of the liquid when the remaining volume of liquid is equal to that of all the normally empty components of the closed circuit connected thereto at the same pressure of the distillation system.

4. The system according to claim 3, **characterized in that** the volume of the liquid is at least equal to that of the other normally empty components of the closed circuit connected to the distillation system.

5. The system according to claims 1 to 4, **characterized in that** said switching valve is formed of a pair of facing discs (DF, DM), the first (DF) of which is fixed and the second (DM) is movable, said first disc having eight holes and the second disc having two pairs of slots (C) shaped as circular sectors forming as a whole an eight-way valve.

6. The system according to claim 5, **characterized in that** said eight-way valve switches the warm and the cold circuits according to the positions of the movable disc (DM) with respect to the fixed disc (DF) as well as according to a third position in which only sanitary warm water is produced in case a different geometry of the slots (C) is provided.

7. The system according to claim 5 or 6, **characterized in that** the sealing between the fixed disc (DF) and the movable disc (DM) is provided by elastic gaskets or by the delivery pressure of one of the two circuits causing the facing discs to press each other.

8. The system according to claims 1 to 7, **characterized in that** said storage tank (ACC) is located upstream of the subcooler (SR), and said cooling Fluid level regulating means comprises a pair of capillaries (CP9, CP91) in parallel, one of which is intercepted by an electrovalve (EV9).

9. The system according to claim 8, **characterized in that** the first capillary (CP91) can accept a flow rate lower than the minimum generated flow rate, and the second capillary (CP9) together with the first capillary (CP91) can accept a flow rate of the coolant higher than the maximum flow rate generated by the system.

10. The system according to claim 8 or 9, **characterized in that** said electrovalve (EV9) is operatingly associated to two level switches (LB44, LB43) so as to keep within said storage tank a level of coolant always between two predetermined limit levels.

11. The system according to claims 1 to 10, **characterized in that** the absorber is formed of a "multi-pipes to pipe" exchanger including a bundle of pipes (MT) non-contacting to one another and placed within a tubular jacket (TU) shaped as a pipe coil or spiral having a vertical axis.

12. The system according to claim 11, **characterized in that** the two-phase mixture forming the absorption phase (water-ammonia) flows in parallel in said bundle of pipes (MT) with downward helicoidal movement, while the coolant flows in counter-current in the room (SZ) among the pipes and the outer tubular jacket (TU).

13. The system according to claim 11 or 12, **characterized in that** the absorber is fed by a distributor having a hollow cylindrical body, in which the liquid-vapour spray mixture is conveyed, and by a fitting-distributor placed at the end of said cylindrical body and provided with several radial passageways connected to the pipes of the bundle.

## Patentansprüche

1. Absorptions-Wärmepumpensystem für Klimaanlagen, in welchem ein Direkt-Flammen-Dampferzeuger (GEN), ein Absorber (ASS), ein Verdampfer (EVA), eine Pumpe (PSR) für eine angereicherte Lösung, ein Paar Plattenventile (VR4, VR9), ein Nachkühler (SR) und ein Lösungsaustauscher (SS) so miteinander verbunden sind, dass sie einen geschlossenen Kreis bilden, wobei das System des weiteren beinhaltet:
- Innewohnende Sicherheitseinrichtungen für die den direkten Flammen eines Brenners (B) ausgesetzten Komponenten, welche den Flüssigkeitsstand in dem Dampferzeuger (GEN) über einem sicheren Stand halten sollen;
- ein Kalt/Warm-Schaltventil, durch das das System unter umkehrbarer Steuerung betreibbar ist, selbst wenn reduzierte oder halbe Leistung vorliegt, ohne ausschalten und neu starten zu müssen, wobei das Schaltventil den Betrieb des Systems durch Umkehren der Wasserströme in dem Wärmepumpensystem selbst steuert;
- eine Kühlflüssigkeitstands-Regulierungseinrichtung, durch die der Stand der Kühlflüssigkeit, welche in einem Lagertank (ACC) enthalten ist, zwischen zwei vorbestimmten Werten so haltbar ist, dass immer der optimale Betrieb des Verdampfers sichergestellt ist; und
- wobei der Absorber (ASS) ein Mehrfach-Rohr Absorber ist, wobei die Rohre in einem rohrförmigen Rohrschlangengehäuse enthalten sind.

2. System nach Anspruch 1, **dadurch gekennzeichnet, dass** die innewohnende Sicherheitseinrichtung aus einer Trommel (PT) gebildet ist, die mit einer geeigneten Menge flüssiger Lösung gefüllt und mit dem Wiedererhitzer so verbunden ist, dass verhindert wird, dass der letztgenannte versehentlich unter einen vorbestimmten sicheren Pegel entleert wird.

3. System nach Anspruch 2, **dadurch gekennzeichnet, dass** die Trommel (BT) am unteren Ausgang (4) des Wiedererhitzers angeordnet und mit einer Röhre (TE) für ihre Verbindung oberhalb der Flüssigkeitsoberfläche des Wiedererhitzers zum Ausgleichen der Pegel versehen ist, und ebenfalls mit einem Saugkopf zum Stoppen des Flüssigkeitsstroms versehen ist, falls das verbleibende Flüssigkeitsvolumen gleich dem all der normalerweise leeren Komponenten des daran angeschlossenen geschlossenen Kreises, bei dem selben Druck des Destillationssystems ist.

4. System nach Anspruch 3, **dadurch gekennzeichnet, dass** das Volumen der Flüssigkeit zumindest gleich dem der anderen normalerweise leeren Komponenten des mit dem Destillationssystem verbundenen geschlossenen Kreises ist.

5. System nach Anspruch 1 bis 4, **dadurch gekennzeichnet, dass** das Schaltventil aus einem Paar zueinander weisender Scheiben (DF, DM) gebildet ist, von dem die erste (DF) fest sitzt und die zweite (DM) beweglich ist, wobei die erste Scheibe acht Löcher und die zweite Scheibe zwei Paare von Nuten (C) aufweist, welche wie kreisförmige Abschnitte gebildet sind, die als Ganzes ein 8-Wege-Ventil bilden.

6. System nach Anspruch 5, **dadurch gekennzeichnet, dass** das 8-Wege-Ventil den warmen und den kalten Kreis entsprechend der Stellungen der beweglichen Scheibe (DM) bezüglich der festsitzenden Scheibe (DF), sowie entsprechend einer dritten Stellung schaltet, an welcher nur sanitäres Warmwasser produziert wird, falls eine unterschiedliche Geometrie der Nuten (C) vorgesehen ist.

7. System nach Anspruch 5 oder 6, **dadurch gekennzeichnet, dass** die Abdichtung zwischen der fest sitzenden Scheibe (DM) durch elastische Dichtungen oder durch den Förderdruck eines der beiden Kreise vorgesehen ist, welcher die zueinander weisenden Scheiben gegeneinander presst.

8. System nach Anspruch 1 bis 7, **dadurch gekennzeichnet, dass** der Lagertank (ACC) dem Nachkühler (SR) vorgelagert angeordnet ist, und dass die Kühlflüssigkeitsstands-Regulierungseinrichtung ein Paar von Kapillaren (CP9, CP91) parallel zueinander aufweist, von denen eines durch ein Elektroventil (EV9) unterbrochen ist.

9. System nach Anspruch 8, **dadurch gekennzeichnet, dass** durch die erste Kapillare (CP91) eine kleinere Strömungsrate als die minimale erzeugte Strömungsrate aufnehmbar ist, und dass durch die zweite Kapillare (CP9) zusammen mit der ersten Kapillare (CP91) eine größere Strömungsrate der Kühlflüssigkeit als die maximale Strömungsrate, welche durch das System erzeugt wird, aufnehmbar ist.

10. System nach Anspruch 8 oder 9, **dadurch gekennzeichnet, dass** das Elektroventil (EV9) operativ mit zwei Pegelschaltern (LB44, LB43) so verbunden ist, dass innerhalb des Lagertanks ein Kühlflüssigkeitspegel immer zwischen zwei vorbestimmten Grenzständen gehalten ist.

11. System nach Anspruch 1 bis 10, **dadurch gekennzeichnet,**
**dass** der Absorber aus einem "Mehrfach-Rohr zu Rohr" Tauscher gebildet ist, welcher eine Anzahl von Rohren (MT), die sich gegenseitig nicht berühren, beinhaltet und in einem rohrförmigen Mantel (TU) angeordnet ist, welcher als Rohrschlange oder Spirale gebildet ist, die eine vertikale Achse aufweist.

12. System nach Anspruch 11, **dadurch gekennzeichnet, dass** die zwei-phasige Mischung, welche die Absorptionsphase (Wasser-Ammoniak) bildet, parallel in dem Rohrbündel (MT) mit einer abwärts gerichteten Schraubenbewegung strömt, während die Kühlflüssigkeit in Gegenstrom in dem Raum (SZ) zwischen den Rohren und dem äußeren rohrförmigen Mantel (TU) strömt.

13. System nach Anspruch 11 oder 12, **dadurch gekennzeichnet,**
**dass** der Absorber durch einen Verteiler, welcher einen hohlen zylindrischen Körper aufweist, in welchem die Flüssigkeits-Dampfsprühmischung befördert wird, und durch einen Einbauverteiler beschickt wird, welcher am Ende des zylindrischen Körpers angeordnet ist und mit mehreren radialen Durchgängen versehen ist, welche mit den Röhren des Bündels verbunden sind.

## Revendications

1. Système de pompe à chaleur à absorption pour climatisation, dans lequel un générateur de vapeur à flamme directe (GEN), un absorbeur (ASS), un évaporateur (EVA), une pompe (PSR) d'une solution enrichie, une paire de soupapes de laminage (VR4, VR9), un sous-dispositif de refroidissement (SR), et un échangeur de solution (SS) sont connectés les uns aux autres de manière à former un circuit fermé, le système comportant de plus en combinaison :
- des moyens de sécurité inhérents pour les composants exposés aux flammes directes du brûleur (B) prévus pour maintenir le niveau de liquide dans le générateur de vapeur (GEN) au-dessus d'un niveau de sécurité,
- une vanne de commutation froid/chaud adaptée pour faire fonctionner le système sous une commande réversible même à une puissance réduite ou à une demi-puissance, sans une coupure ni une remise en marche quelconque, ladite vanne de commutation commandant le fonctionnement du système en inversant les courants d'eau dans le système de pompe à chaleur lui-même,
- des moyens de régulation de niveau de fluide de refroidissement adaptés pour maintenir le niveau du fluide de refroidissement contenu dans un réservoir de stockage (ACC) entre deux valeurs prédéterminées, de manière à toujours garantir le fonctionnement optimum de l'évaporateur, et
- l'absorbeur (ASS) étant un absorbeur à multiples tuyaux, lesdits tuyaux étant contenus dans une enveloppe hélicoïdale tubulaire.

2. Système selon la revendication 1, **caractérisé en ce que** lesdits moyens de sécurité inhérents sont constitués d'un tambour (BT) rempli d'une quantité appropriée de solution liquide, et connecté au rebouilleur de manière à empêcher ce dernier d'être vidé accidentellement en dessous d'un niveau de sécurité prédéterminé.

3. Système selon la revendication 2, **caractérisé en ce que** ledit tambour (BT) est positionné au niveau de la sortie inférieure (4) du rebouilleur, est muni d'un tuyau (TE) pour sa connexion au-dessus de la surface du liquide du rebouilleur, afin de compenser les niveaux, et est également muni d'une tête d'aspiration, de manière à arrêter l'écoulement du liquide lorsque le volume de liquide restant est égal à celui de tous les composants normalement vides du circuit fermé connecté à celle-ci à la même pression du système de distillation.

4. Système selon la revendication 3, **caractérisé en ce que** le volume de liquide est au moins égal à celui des autres composants normalement vides du circuit fermé connecté au système de distillation.

5. Système selon l'une quelconque des revendications 1 à 4, **caractérisé en ce que** ladite vanne de commutation est constituée d'une paire de disques en vis-à-vis (DF, DM), le premier (DF) étant fixe et le second (DM) étant mobile, ledit premier disque ayant huit trous et le second disque ayant deux paires de fentes (C) conformées en secteurs circulaires, formant ensemble une vanne à huit voies.

6. Système selon la revendication 5, **caractérisé en ce que** ladite vanne à huit voies commute les circuits chaud et froid selon les positions du disque mobile (DM) par rapport au disque fixe (DF), de même que selon une troisième position dans laquelle seule de l'eau chaude sanitaire est produite dans le cas où une géométrie différente des fentes (C) est fournie.

7. Système selon l'une des revendications 5 ou 6, **caractérisé en ce que** l'étanchéité entre le disque fixe (DF) et le disque mobile (DM) est fournie par des joints d'étanchéité élastiques ou par la pression d'acheminement d'un des deux circuits amenant les disques en vis-à-vis à être en appui l'un contre l'autre.

8. Système selon l'une des revendications 1 à 7, **caractérisé en ce que** ledit réservoir de stockage (ACC) est positionné en amont du sous-dispositif de refroidissement (SR), et lesdits moyens de régulation de niveau de fluide de refroidissement comportent une paire de capillaires (CP9, CP91) en parallèle, dont un est intercepté par une électrovanne (EV9).

9. Système selon la revendication 8, **caractérisé en ce que** le premier capillaire (CP91) peut accepter un débit d'écoulement inférieur au débit d'écoulement généré minimum, et le second capillaire (CP9), en même temps que le premier capillaire (CP91), peut accepter un débit d'écoulement de liquide de refroidissement supérieur au débit d'écoulement maximum généré par le système.

10. Système selon la revendication 8 ou 9, **caractérisé en ce que** ladite électrovanne (EV9) est associée de manière opérationnelle à deux commutateurs de niveau (LB44, LB43), de manière à maintenir à l'intérieur dudit réservoir de stockage un niveau de liquide de refroidissement toujours compris entre deux niveaux limites prédéterminés.

11. Système selon l'une des revendications 1 à 10, **caractérisé en ce que** l'absorbeur est formé d'un échangeur à "multiples tuyaux vers tuyaux", comportant un faisceau de tuyaux (MT) n'étant pas en contact les uns avec les autres, et positionnés dans une enveloppe tubulaire (TU) mise en forme sous la forme d'un tuyau hélicoïdal ou d'une spirale ayant un axe vertical.

12. Système selon la revendication 11, **caractérisé en ce que** le mélange à deux phases formant la phase d'absorption (eau-ammoniac) s'écoule en parallèle dans ledit faisceau de tuyau (MT) avec un déplacement en hélice vers le bas, tandis que le liquide de refroidissement s'écoule à contre courant dans l'espace (SZ) situé parmi les tuyaux et l'enveloppe tubulaire extérieure (TU).

13. Système selon la revendication 11 ou 12, **caractérisé en ce que** l'absorbeur est alimenté par un distributeur ayant un corps cylindrique creux, dans lequel est transporté le mélange de pulvérisation liquide-vapeur, et par un distributeur d'agencement positionné à l'extrémité dudit corps cylindrique et muni de plusieurs passages radiaux connectés aux tuyaux du faisceau.
